(19) **Europäisches Patentamt**
**European Patent Office**
**Office européen des brevets**

(11) **EP 3 717 945 B1**

(12) **EUROPEAN PATENT SPECIFICATION**

(45) Date of publication and mention
of the grant of the patent:
**26.04.2023   Bulletin 2023/17**

(21) Application number: **18740073.4**

(22) Date of filing: **22.06.2018**

(51) International Patent Classification (IPC):
***G02B 6/38*** *(2006.01)*

(52) Cooperative Patent Classification (CPC):
**G02B 6/387; G02B 6/3861; G02B 6/3889**

(86) International application number:
**PCT/US2018/039019**

(87) International publication number:
**WO 2019/108259 (06.06.2019 Gazette 2019/23)**

(54) **FIBER OPTIC CONNECTORS AND CONNECTORIZATION EMPLOYING ADAPTER EXTENSIONS AND/OR FLEXURES**

FASEROPTISCHE STECKVERBINDER UND KONTAKTIERUNG UNTER VERWENDUNG VON ADAPTERVERLÄNGERUNGEN UND/ODER -BIEGUNGEN

CONNECTEURS DE FIBRES OPTIQUES, ET CONNECTORISATION UTILISANT DES RALLONGES D'ADAPTATEURS ET/OU DES FLEXIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2017   PCT/US2017/064063**

(43) Date of publication of application:
**07.10.2020   Bulletin 2020/41**

(60) Divisional application:
**23162340.6**

(73) Proprietor: **Corning Research & Development Corporation**
**Corning, New York 14831 (US)**

(72) Inventors:
• **BACA, Adra Smith**
**Hickory, North Carolina 28601 (US)**
• **ROSSON, Joel Christopher**
**Hickory, North Carolina 28601 (US)**

(74) Representative: **Sturm, Christoph**
**Patentanwälte Sturm Weilnau Franke**
**Partnerschaft mbB**
**Unter den Eichen 5 (Haus C-Süd)**
**65195 Wiesbaden (DE)**

(56) References cited:
**US-A1- 2014 294 395     US-A1- 2014 355 936**
**US-A1- 2015 003 788     US-A1- 2015 036 982**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### CROSS-REFERENCE TO RELATED APPLICATIONS

The present application claim priority to International Patent Application No. PCT/US2017/064063, filed November 30, 2017.

### BACKGROUND

*Field*

The present disclosure relates generally to assemblies for interconnecting or otherwise terminating optical fibers and fiber optic cables in a manner suitable for mating with corresponding optical receptacles.

*Technical Background*

Optical fibers are used in an increasing number and variety of applications, such as a wide variety of telecommunications and data transmission applications. As a result, fiber optic networks include an ever increasing number of terminated optical fibers and fiber optic cables that can be conveniently and reliable mated with corresponding optical receptacles in the network. These terminated optical fibers and fiber optic cables are available in a variety of connectorized formats including, for example, hardened OptiTap® and OptiTip® connectors, field-installable UniCam® connectors, preconnectorized single or multi-fiber cable assemblies with SC, FC, or LC connectors, etc., all of which are available from Coming Incorporated, with similar products available from other manufacturers, as is well documented in the patent literature.

The optical receptacles with which the aforementioned terminated fibers and cables are coupled are commonly provided at optical network units (ONUs), network interface devices (NIDs), and other types of network devices or enclosures, and often require hardware that is sufficiently robust to be employed in a variety of environments under a variety of installation conditions. These conditions may be attributable to the environment in which the connectors are employed, or the habits of the technicians handling the hardware. Consequently, there is a continuing drive to enhance the robustness of these connectorized assemblies, while preserving quick, reliable, and trouble-free optical connection to the network.

US 2015 / 003 788 A1 discloses a connectorized fiber optic cable assembly comprising: a connector housing comprising a ferrule retaining portion, an adapter seating portion, and a longitudinal axis extending through the ferrule retaining portion of the connector housing and the adapter seating portion of the connector housing; a ferrule retained by the ferrule retaining portion of the connector housing, the ferrule comprising an optical fiber bore; a cable adapter comprising an optical cable passageway, an optical fiber passageway, an extension securement portion, a housing insert portion seated in the adapter seating portion of the connector housing, and an adapter abutment positioned between the extension securement portion and the housing insert portion, wherein the adapter abutment limits an extent to which the cable adapter extends into the adapter seating portion of the connector housing; an adapter extension secured to the extension securement portion of the cable adapter and comprising an extended cable passageway; a fiber optic cable extending along the extended cable passageway of the adapter extension and the optical cable passageway of the cable adapter, the fiber optic cable comprising an optical fiber extending along optical fiber passageway of the cable adapter to the optical fiber bore of the ferrule; and a multi-diametrical sealing flexure comprising a cable engaging portion engaging an outer cable surface of the fiber optic cable, a housing engaging portion engaging an outer housing surface of the connector housing, and an intermediate flexure portion extending from the cable engaging portion to the housing engaging portion and engaging an outer extension surface of the adapter extension.

US 2015 / 036 982 A1 discloses other prior art.

### BRIEF SUMMARY

According to the subject matter of the present disclosure, fiber optic connectors, connectorized cable assemblies, and methods for the connectorization of cable assemblies are provided.

The present invention provides a connectorized fiber optic cable assemblies according to claim 1.

In accordance with additional embodiments of the present disclosure, the adapter extension may be integrated with the cable adapter, e.g., as a unitary molded part.

The present invention provides further a method of connectorizing fiber optic cable according to claim 13.

In accordance with additional embodiments of the present disclosure, connectorized fiber optic cable assemblies are provided comprising a multi-diametrical sealing flexure and a subcutaneous sealing element. The multi-diametrical sealing flexure comprises a cable engaging portion engaging an outer cable surface of the fiber optic cable and a housing engaging portion engaging an outer housing surface of the connector housing. The subcutaneous sealing element is positioned between an outer surface of the connector housing and an inner surface of the multi-diametrical sealing flexure to bound an entire rotational periphery of the connector housing about the longitudinal axis of the connector housing and form an annular projection in an outer surface of the multi-diametrical sealing flexure.

In accordance with alternative embodiments of the present disclosure, fiber optic connectors are provided comprising a connector housing and a cable adapter where the cable adapter comprises an optical cable passageway, an optical fiber passageway, a housing insert portion, an adhesive window, and an adapter abutment. The housing insert portion is structurally configured to be seated in the adapter seating portion of the connector housing to align the optical cable passageway and the optical fiber passageway with the longitudinal axis of the connector housing. The adhesive window resides in the housing insert portion in communication with the optical fiber passageway. The adapter abutment and the connector housing are structurally configured to form an adapter sealing interface where the adapter abutment contacts an abutment facing surface of the connector housing, and the cable adapter and the connector housing are structurally configured to form complementary keying surfaces that are positioned to align the adhesive injection port of the connector housing with the adhesive window of the cable adapter.

In accordance with further alternative embodiments of the present disclosure, connectorized fiber optic cable assemblies are provided comprising a connector housing, a ferrule, a cable adapter, and a fiber optic cable. The cable adapter, which is not part of the present invention, comprises an adhesive window and the cable adapter and the connector housing are structurally configured to form complementary keying surfaces that are positioned to align the adhesive injection port of the connector housing with the adhesive window of the cable adapter. The optical fiber crosses the adhesive window of the cable adapter in a fiber potting portion of the optical fiber passageway of the cable adapter.

In accordance with still further alternative examples which are not part of the present invention, methods of connectorizing fiber optic cables are provided where the complementary keying surfaces formed by the cable adapter and the connector housing are aligned and the cable adapter is seated in the adapter seating portion of the connector housing to align the adhesive injection port of the connector housing with the adhesive window of the cable adapter. A fiber optic cable is extended along the optical cable passageway of the cable adapter and the longitudinal axis of the connector housing into the ferrule retaining portion of the connector housing such that the optical fiber crosses the adhesive window of the cable adapter in a fiber potting portion of the optical fiber passageway of the cable adapter. A ferrule is positioned along an end portion of the optical fiber and is retained in the ferrule retaining portion of the connector housing. An adhesive is injected through the adhesive injection port of the connector housing, into the adhesive window of the cable adapter to secure the cable adapter in the connector housing and the optical fiber in the cable adapter.

In accordance with additional alternative examples which are not part of the present invention, fiber optic connectors are provided comprising a connector housing and a cable adapter, where an interior surface of the connector housing and an exterior surface of the cable adapter form a capillary gap when the housing insert portion of the cable adapter is seated in the adapter seating portion of the connector housing. The the capillary gap is displaced from the longitudinal axis of the connector housing from the adapter sealing interface to an adhesive barrier formed by portions of the cable adapter and the connector housing when the housing insert portion of the cable adapter is seated in the adapter seating portion of the connector housing.

In accordance with further alternative examples which are not part of the present invention, a connector housing is provided comprising a ferrule retaining portion, a keying portion, a sealing element retaining portion, and an adhesive injection port where the adhesive injection port is defined in a potting portion of the connector housing and is separated from the ferrule retaining portion of the connector housing and the keying portion of the connector housing by the sealing element retaining portion of the connector housing, along the longitudinal axis of the connector housing.

Although the concepts of the present disclosure are described herein with reference to a set of drawings that show a particular type of fiber optic cable, and connector components of particular size and shape, it is contemplated that the concepts may be employed in any optical fiber connectorization scheme including, for example, and without limitation, hardened OptiTap® and OptiTip® connectors, field-installable UniCam® connectors, single or multi-fiber cable assemblies with SC, FC, LC, or multi-fiber connectors, etc.

BRIEF DESCRIPTION OF THE SEVERAL VIEWS OF THE DRAWINGS

The following detailed description of specific embodiments of the present disclosure can be best understood when read in conjunction with the following drawings, where like structure is indicated with like reference numerals and in which:

Fig. 1 illustrates a connectorized cable assembly according to one embodiment of the present disclosure;
Fig. 2 illustrates a connectorized cable assembly employing a hardened OptiTap optical connector;
Fig. 3 illustrates a connectorized cable assembly employing a type SC optical connector;
Fig. 4 is a cross-sectional illustration of the connectorized fiber optic cable assembly of Fig. 1;
Fig. 4A is an exploded view of selected components of Fig. 4;
Fig. 5 is a schematic illustration of the multicomponent bending stiffness profile that may be presented by a fiber optic connector and a connectorized fiber optic cable assembly according to the present disclosure;
Fig. 6 is an alternative exploded view of selected components of Fig. 4;
Fig. 7 illustrates a cable adapter and adapter extension according to an example which is not part of the present invention;

Fig. 8 illustrates a cable adapter according to an example which is not part of the present invention;

Fig. 9 illustrates an adapter extension according to an example which is not part of the present invention;

Fig. 10 illustrates a portion of a connectorized cable assembly according to an example which is not part of the present invention;

Fig. 11 illustrates the manner in which a cable adapter may interface with a connector housing according to an example which is not part of the present invention; and

Fig. 12 illustrates the use of a subcutaneous sealing element in a connectorized cable assembly of the present disclosure.

DETAILED DESCRIPTION

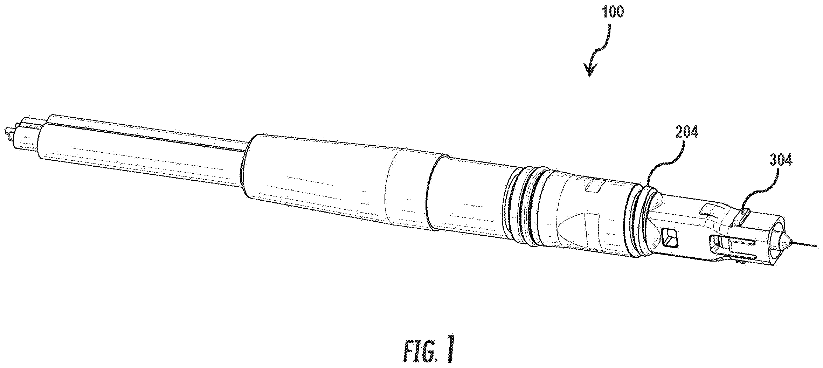

Referring initially to Figs. 1-3, as is noted above, the connectorization concepts of the present disclosure may be employed in a variety of optical fiber connectorization schemes including, for example, and without limitation, hardened OptiTap® and OptiTip® connectors, field-installable UniCam® connectors, single or multi-fiber cable assemblies with SC, FC, LC, or multi-fiber connectors, etc. To help illustrate this point, Fig. 1 illustrates a connectorized cable assembly 100 according to an embodiment of the present disclosure where the connectorized cable assembly defines a customized connectorization profile that is particularly well suited to interface with an optical connectorization terminal comprising a plurality of relatively closely packed connection ports.

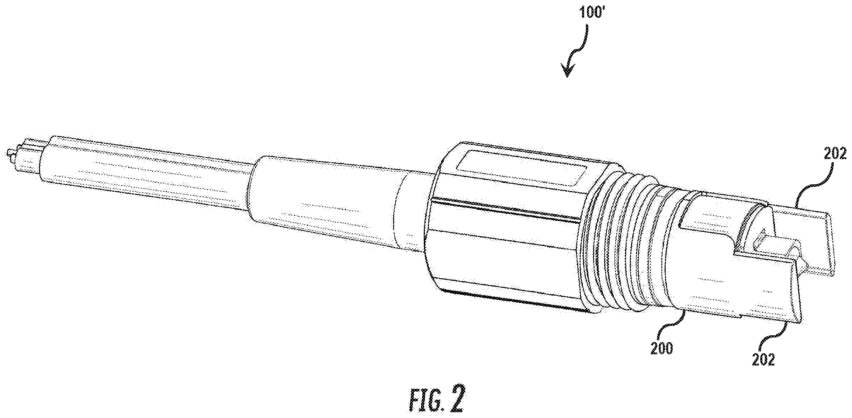

Although the following description presents the concepts of the present disclosure in the context of the connectorized cable assembly 100 illustrated in Fig. 1, it is contemplated that the concepts of the present disclosure will enjoy equal applicability to any of a variety of cable assembly types. For example, and not by way of limitation, Fig. 2 illustrates a connectorized cable assembly 100' employing a conversion housing 200 for a hardened optical connector, one embodiment of which is available under the trade name OptiTap@. OptiTap@ type conversion housings 200, and some other hardened connector conversion housings, will comprise a pair of opposing fingers 202 comprising opposing interior faces that extend parallel to, and are arranged symmetrically about, the longitudinal axis of the connector housing. The finger spacing between the opposing interior faces of the opposing fingers 202 is between 10.80 millimeters and 10.85 millimeters. finger depth along a direction parallel to the longitudinal axis of the connector housing is between 8.45 millimeters and 8.55 millimeters. The finger width along a direction perpendicular to the finger depth and the longitudinal axis of the connector housing is less than 10 millimeters. The outer faces of the opposing fingers lie along a common outside diameter of between 15.75 millimeters and 15.85 millimeters, and the outer face of one of the opposing fingers is truncated in a plane parallel to the opposing interior faces to define a truncated span extending from the outer face of the truncated opposing finger to the outer face of the opposite finger of between about 14.75 millimeters and about 14.95 millimeters. This truncation provides a keying functionality when the connector is paired with a connection port with complementary keying surfaces.

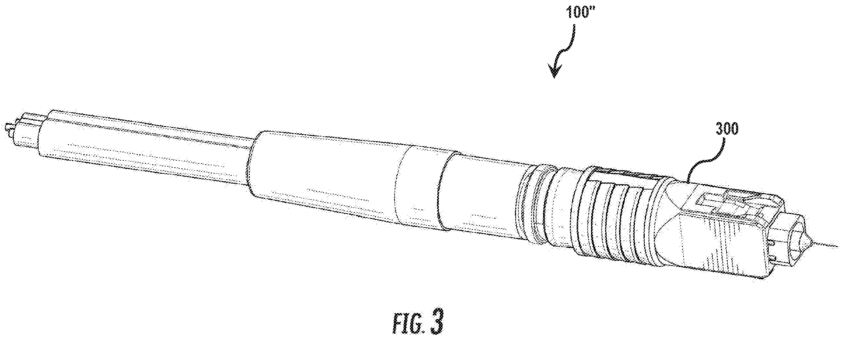

As a further non-limiting example, Fig. 3 illustrates a connectorized cable assembly 100" employing a type SC conversion housing 300. Type SC conversion housings are characterized by a connector footprint as set forth in IEC 61754-4, published by the International Electrical Commission, which defines the standard interface dimensions for the type SC family of fiber optic connectors and may be updated periodically. As is noted in the aforementioned standard, the parent connector for the type SC connector family is a single position plug connector which is characterized by a 2.5 millimeters nominal ferrule diameter. It includes a push-pull coupling mechanism which is spring loaded relative to the ferrule in the direction of the optical axis. The plug has a single male key which may be used to orient and limit the relative position between the connector and the component to which it is mated. The optical alignment mechanism of the connector is of a resilient sleeve style. IEC 61754-4 defines the standard interface dimensions of active device receptacles for the type SC connectors. The receptacles are used to retain the connector plug and mechanically maintain the optical datum target of the plugs at a defined position within the receptacle housings. The SC connector standard encompasses simplex plug connector interfaces, simplex adaptor connector interfaces, duplex plug connector interfaces, and duplex adaptor connector interfaces.

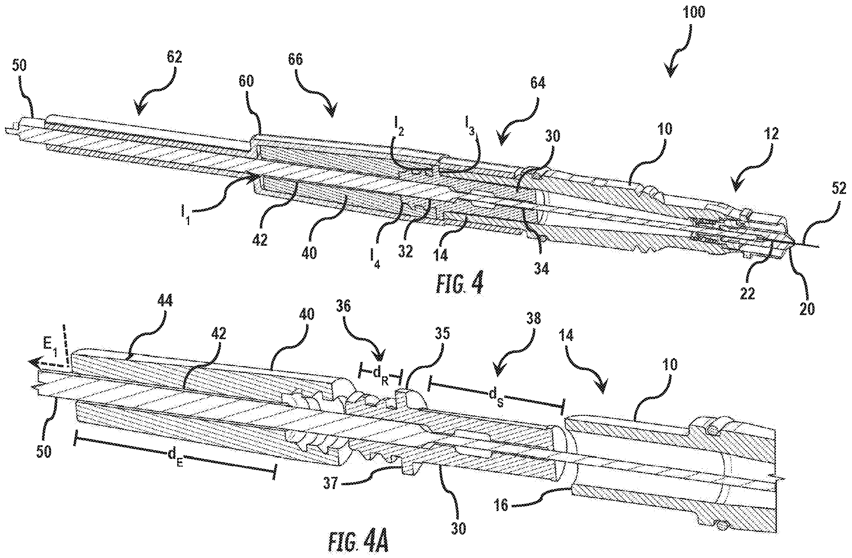

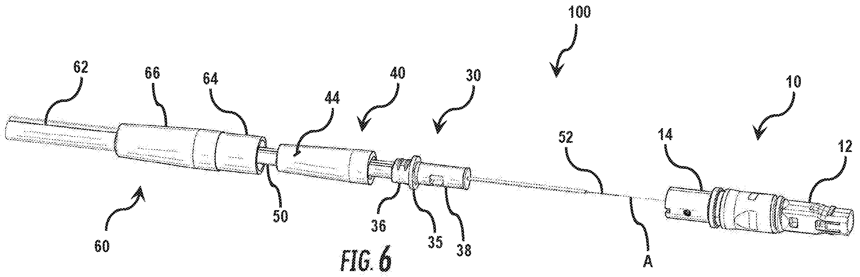

Referring to Fig. 4, which is a cross-sectional illustration of the connectorized fiber optic cable assembly 100 of Fig. 1, to Fig. 4A, which is an exploded view of selected components of Fig. 4, and to Fig. 6, which is an alternative exploded view of selected components of the assembly 100, it is noted that the assembly 100 generally comprises a connector housing 10, an ferrule 20, a cable adapter 30, an adapter extension 40, a fiber optic cable 50 comprising an optical fiber 52, and a multi-diametrical sealing flexure 60. The connector housing 10, ferrule 20, cable adapter 30, adapter extension 40, and multi-diametrical sealing flexure 60 may be presented as respective single piece components, i.e., components that are fabricated from a single material and have a unitary compositional construction.

The connector housing 10 comprises a ferrule retaining portion 12, an adapter seating portion 14, and a longitudinal axis A that is obscured in Figs. 4 and 4A but extends along the optical fiber 52 of the fiber optic cable 50, through the ferrule retaining portion 12 and the adapter seating portion 14 of the connector housing 10. The ferrule 20 is retained by the ferrule retaining portion 12 of the connector housing and comprises an optical fiber bore 22 that is aligned with the longitudinal axis A of the connector housing 10. For single fiber cables this alignment will be coaxial. For multifiber cables, this alignment will be orthogonally offset for one, more than one, or all of the optical fibers of the cable.

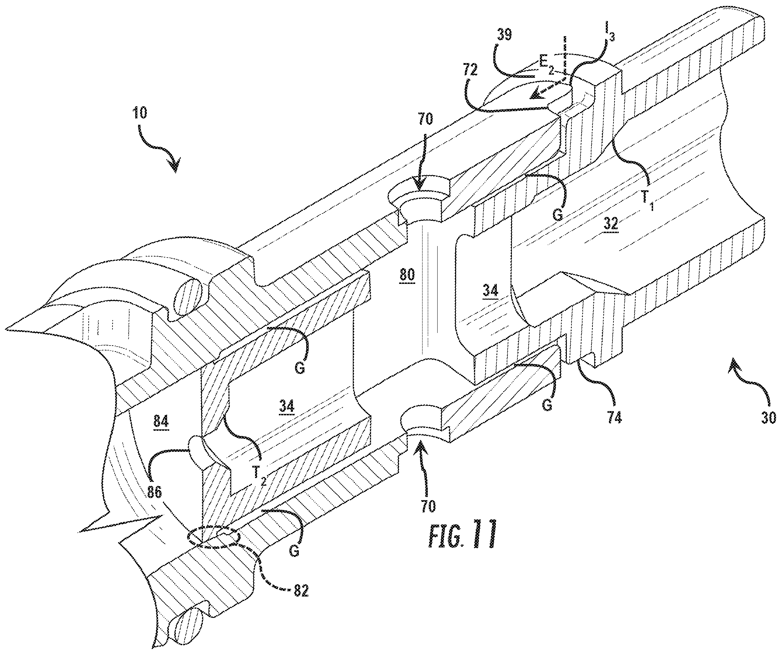

The cable adapter 30 comprises an optical cable passageway 32 and an optical fiber passageway 34, which are partially obscured in Figs. 4 and 4A by the fiber optic cable 50, but are illustrated with further clarity in Fig. 11. The cable adapter 30 further comprises an extension securement portion 36, a housing insert portion 38 seated in the adapter seating portion 14 of the connector housing 10, and an adapter abutment 35. The adapter abutment 35, which functions as a stop surface, is positioned between the extension securement portion 36 and the housing insert portion 38 and serves to limit an extent to which the cable adapter 30 may extend into the adapter seating portion 14 of the connector housing 10.

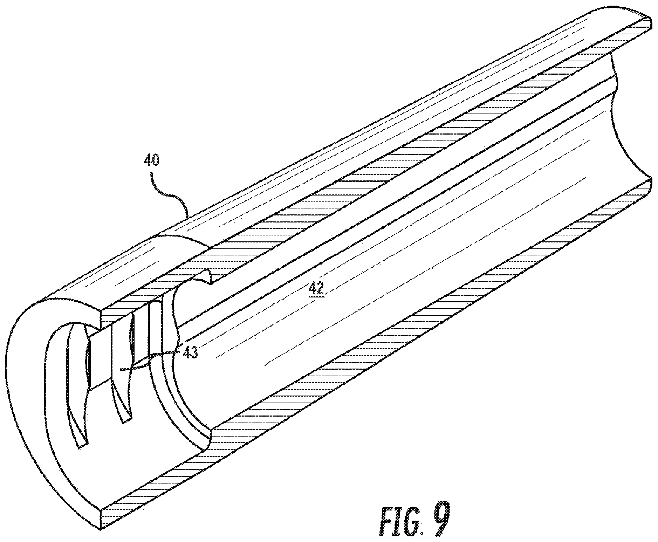

The adapter extension 40 is secured to the extension securement portion 36 of the cable adapter 30 and comprises an extended cable passageway 42, which is partially obscured in Figs. 4 and 4A by the fiber optic cable 50, but is illustrated with further clarity in Fig. 9. The fiber optic cable 50 extends along the extended cable passageway 42 of the adapter extension 40 and the optical cable passageway 32 of the cable adapter 30. The optical fiber 52 of the fiber optic cable 50 extends along optical fiber passageway 34 of the cable adapter 30 to the optical fiber bore 22 of the ferrule 20.

The multi-diametrical sealing flexure 60 comprises a cable engaging portion 62 engaging an outer cable surface of the fiber optic cable, a housing engaging portion 64 engaging an outer housing surface of the connector housing, and an intermediate flexure portion 66 extending from the cable engaging portion 62 to the housing engaging portion 64 and engaging an outer extension surface 44 of the adapter extension 40.

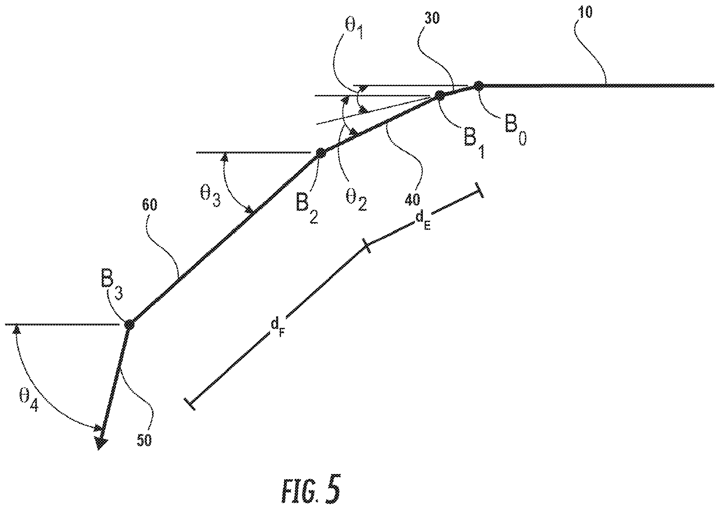

Fig. 5 is a schematic illustration of the multicomponent bending stiffness profile that may be presented by a fiber optic connector and a connectorized fiber optic cable assembly according to the present disclosure to protect the optical fiber 52 and other components of the fiber optic cable 50 from undue stress during installation and use. This bending stiffness profile and its respective component index values are conceptually related to the well-established concept of "flexural modulus," which can be used to characterize a material's ability to bend. Generally, stiffer connector components will yield less to bending forces than others and, as a result, generally higher bending index values can be associated with particular portions of such components. The bending index values B1, B2, B3, etc., recited herein are location-specific values that characterize the particular bending behavior of the connector at specific locations in the connector and will depend, for example, on the material forming the parts, the size and geometry of the parts, and the manner in which the parts cooperate with other parts in the connector assembly. For this reason, the bending index values B1, B2, B3, etc., are discussed herein in relative terms, with B 1 being generally larger than B2, B2 being generally larger than B3, and B3 representing a degree of stiffness, or bend resistance, that may be greater than that of the fiber optic cable that is used with the optical fiber connector. In this manner, a connectorized fiber optic cable assembly may be constructed to present a degree of bend resistance that progresses from a relatively small value along the fiber optic cable itself, to progressively higher values as the cable extends farther and farther into the connector assembly of the cable. All bending index values and relative values disclosed herein are understood to be referenced at room temperature, which is defined herein as a temperature of between about 20°C and bout 25°C.

More particularly, a particular bending index value $B_n$ at a specific free end location n on a connector part, refers to the bend resistance of the part at the free end, under a given non-destructive transverse fiber load F applied to the free end, and can be quantified by referring to the degree to which the free end deflects relative to an anchored portion of the connector assembly. Referring to the schematic illustration of Fig. 5, this relationship can be characterized by the following relation:

$$B_n = \frac{F}{\tan(\theta_n)}$$

where $\theta_n$ is the angle of deflection of the part at its free end, relative to an anchored portion of the connector assembly, and F represents the fiber load, in Newtons. In the context of connectorized cable assemblies, it is contemplated that some fiber optic cables will be so flexible that they do not support their own weight without bending, even when a relatively short length of cable is presented. In these cases, it may be said that the bending index value at a location along the cable will be very close to zero. At the opposite end of the spectrum lie highly rigid components, like connector housings, which may be characterized by nearly infinite bending index values under given non-destructive transverse loads.

It is contemplated that suitable transverse fiber loads F for establishing a particular bending index value $B_n$ will typically fall between about 10 N and about 50 N and can be considered non-destructive so long as it does not cause the cable adapter to deflect more than 45 degrees relative to connector housing, when the connector housing includes the anchored portion of the connector. Non-destructive transverse fiber loads F will also not be so great as to separate components of the connector from each other, damage components of the connector, or exceed the load limit of the connector port with which the connector is designed to cooperate.

Referring collectively to Figs. 4, 4A, 5, and 6, a cable assembly 100 according to the present disclosure may comprise a multicomponent bending stiffness profile comprising a first bending index value B1 at a free end of the extension securement portion 36 of the cable adapter 30, a second bending index value B2 at a free end of the adapter extension 40, and a third bending index value B3 at a free end of the multi-diametrical sealing flexure 60, where B1 > B2 > B3. In one embodiment, $B1 > 2(B2)$ and $B2 > 2(B3)$, with B3 representing a degree of resistance to bending that is greater than that of the fiber optic cable. In many cases, the connector housing 10 will relatively rigid. For example, the multicomponent bending stiffness profile may further comprise a housing bending index B0 that is at least three times greater than the first bending index value B1.

The inherent stiffness of each of the various materials used to fabricate the fiber optic connectors and connectorized fiber optic cable assemblies according to the present disclosure may also play a significant role in protecting the optical fiber 52 and other components of the fiber optic cable 50 from undue stress during installation and use. For example, given a relatively rigid connector housing 10 characterized by a Young's modulus $E_H$, it is contemplated that the cable adapter 30 may be characterized by a Young's modulus $E_A$, which is less than $E_H$. Similarly, the adapter extension 40 may be characterized by a Young's modulus $E_E$, which is less than $E_A$. Finally, the multi-diametrical sealing flexure 60 may be characterized by a Young's modulus $E_F$, which is less than $E_E$. The resulting assembly will assume a bend profile not unlike that illustrated schematically in Fig. 5, under given transverse loads. In particular embodiments, the connector housing 10 and the cable adapter 30 are fabricated from Polyetherimide, Polyethersulfone, PEEK, or combinations thereof.

In particular embodiments, the adapter extension 40 is characterized by a Young's modulus of between about 80 MPa and about 500 MPa, and the multi-diametrical sealing flexure 60 is characterized by a Young's modulus of between about 30 MPa and about 80 MPa, at room temperature. In such embodiments, the connector housing 10 may be characterized by a Young's modulus of between about 2000 MPa and about 6000 MPa, and the cable adapter 30 may be characterized by a Young's modulus of between about 1500 MPa and about 6000 MPa, at room temperature.

As is illustrated schematically in Fig. 5, and referring to the components illustrated in Figs. 4, 4A and 6, the cable assembly 100 may be described as comprising a first bending terminus B1 at a free end of the extension securement portion 36 of the cable adapter 30, a second bending terminus B2 at a free end of the adapter extension 40, and a third bending terminus B3 at a free end of the multi-diametrical sealing flexure 60. In this context, embodiments are contemplated where the free end of the adapter extension 40 is displaced from the free end of the extension securement portion of the cable adapter 30 along the longitudinal axis A by an effective extension length $d_E$ of at least about 15 centimeters, or by an effective extension length $d_E$ of between about 15 millimeters and about 30 millimeters. Similarly, the free end of the multi-diametrical sealing flexure 60 may be displaced from the free end of the adapter extension 40 by an effective flexure length $d_F$ of at least about 30 millimters, or by an effective flexure length $d_F$ of between about 30 millimeters and about 100 millimeters. In some implementations of the concepts of the present disclosure, it may be more preferable to refer to the following relation as a guide to designing the adapter extension 40 and the multi-diametrical sealing flexure 60:

$$1 \leq \frac{d_F}{d_E} \leq 4.$$

In other implementations of the concepts of the present disclosure, it may be more preferable to ensure that the effective extension length $d_E$ is at least about 10 % of a length of a connectorized span of the cable assembly and that the effective flexure length $d_F$ is at least about 20 % of a length of a connectorized span of the cable assembly.

Fiber optic connectors and connectorized fiber optic cable assemblies according to the present disclosure may be conveniently defined with reference to the various connector component interfaces embodied therein. These connector component interfaces may be presented at a variety of locations in an assembly and typically play a significant role in the integrity of the assembly because they provide non-destructive points of relief in the assembly under transverse loads. For example, referring to Figs. 4 and 4A, a connectorized fiber optic cable assembly 100 according to the present disclosure may comprises a cable entry interface $I_1$, an adapter abutment interface $I_2$, and an adapter sealing interface $I_3$. The cable entry interface $I_1$ is formed by an inner surface of the extended cable passageway 42 of the adapter extension 40 and an outer surface of the fiber optic cable 50, where the fiber optic cable 50 extends into the extended cable passageway 42 of the adapter extension 40 towards the ferrule 20. The adapter abutment interface $I_2$ is formed by the adapter extension 40 and the adapter abutment 35 of the cable adapter 30, where the adapter extension 40 contacts an extension-facing surface 37 of the adapter abutment 35. The adapter sealing interface $I_3$ is formed by the adapter abutment 35 and the connector housing 10, where the adapter abutment 35 contacts an abutment facing surface 16 of the connector housing 10. The adapter abutment interface $I_2$ may be orthogonal to the longitudinal axis A of the connector housing 10. The adapter sealing interface $I_3$ originates at a housing-to-adapter elbow and may be orthogonal to the longitudinal axis A of the connector housing 10. The cable entry interface $I_1$ originates at a cable-to-connector elbow and may be oriented parallel to the longitudinal axis A of the connector housing 10, or otherwise be displaced from but extend in a common direction as the longitudinal axis A.

As is illustrated in Fig. 4, the multi-diametrical sealing flexure 60 forms respective strain relieving sealing bridges across each of these interfaces, i.e., by extending across the cable entry interface $I_1$, the adapter abutment interface $I_2$, and the adapter sealing interface $I_3$. More particularly, the cable entry interface $I_1$, the adapter abutment interface $I_2$, and the adapter sealing interface $I_3$ form respective non-destructive flexural relief points that are distributed along the length of the fiber optic connector formed by the connector housing 10, the ferrule 20, the cable adapter 30, and the adapter extension 40. The multi-diametrical sealing flexure 60 is sufficiently flexible to maintain a seal across these flexural relief points as the connectorized portion of the cable assembly 100 is subject to a transverse load, for example, a bend of at least about 90 degrees along the longitudinal axis of the connector.

Connectorized fiber optic cable assemblies according to the present disclosure may further comprise an adapter mounting interface $I_4$ formed by an inner surface of the extended cable passageway 42 of the adapter extension 40 and an outer surface of the extension securement portion 36 of the cable adapter 30, where the cable adapter 30 extends into the extended cable passageway 42 of the adapter extension 40, towards the cable entry interface $I_1$ of the adapter extension 40. In the illustrated embodiment, the adapter mounting interface $I_4$ is generally oriented parallel to the longitudinal axis A of the connector housing 10 but includes irregularities to enhance securement of the adapter extension 40 to the cable adapter 30.

Referring to Fig. 4, it is noteworthy that the aforementioned cable-to-connector and housing-to-adapter elbows, at which the cable entry interface $I_1$ and adapter sealing interface $I_3$ originate are oriented in opposite directions relative to the longitudinal axis A. More specifically, referring to Fig. 4A, the cable-to-connector elbow $E_1$ is oriented away from the ferrule retaining portion 12 of the connector housing 10, while, referring to Fig. 11, the housing-to-adapter elbow $E_2$ is oriented in the opposite direction. The housing-to-adapter elbow $E_2$ comprises an exposed anchoring face 39 on the adapter abutment 35 that is oriented towards the ferrule retaining portion 12 of the connector housing 10. The surface area of the exposed anchoring face 39 is, for example, at least about 5 square millieters to ensure that it is sufficiently large to help fix the multi-diametrical sealing flexure 60 in place about the connector housing 10, the adapter extension 40, and the fiber optic cable 50. For example, where the exposed anchoring face 39 is presented as a substantially continuous annulus with an inner radius of about 1.5 centimeters and an outer radius of about 1.75 centimeters, the exposed anchoring face 39 would have a surface area of about 2.5 square centimeters. The opposing elbows $E_1$, $E_2$ act to secure the multi-diametrical sealing flexure 60 in place along the longitudinal axis A as it forms respective sealing bridges across the cable-to-connector elbow $E_1$ and the oppositely directed hous-ing-to-adapter elbow $E_2$.

Referring further to Figs. 4, 4A, 6, and 11, it is noted that the optical fiber passageway 34 of the cable adapter 30 is positioned along the longitudinal axis A between the optical cable passageway 32 of the cable adapter 30 and the ferrule 20. The optical cable passageway 32 of the cable adapter 30 is larger than the optical fiber passageway 34 of the cable adapter 30 because it must additionally accommodate a unstripped cable, i.e., a cable including a jacket, while the optical fiber passageway merely needs to be large enough to accommodate a stripped cable.

As is illustrated in Fig. 4A, the housing insert portion 38 of the cable adapter 30 extends from the adapter abutment 35, along the longitudinal axis A, towards the ferrule 20 for a seated length $d_S$. The extension securement portion 36 of the cable adapter 30 extends from the adapter abutment 35 in an opposite direction along the longitudinal axis A for an extension receiving length $d_R$, where:

$$d_R < d_S.$$

The free end of the extension securement portion 36 of the cable adapter 30 is displaced from a free end of the adapter extension 40 along the longitudinal axis by an effective extension length $d_E$, where:

$$d_R < d_E.$$

In a variety of embodiments, it is contemplated that the extended cable passageway 42 of the adapter extension may be between about 15 and about 30 millimeters in length, and the adapter extension 40 may comprise a wall thickness that is between about 1 millimeter and about 4 millimeters, over a majority of the length of the extended cable passageway 42 of the adapter extension 40. In other embodiments, the extended cable passageway of the adapter extension 40 is at least about 15 centimeters in length and the adapter extension 40 comprises a wall thickness that is less than about 1 millimeter over a majority of the length of the extended cable passageway 42 of the adapter extension 40. In still further embodiments, the extended cable passageway 42 of the adapter extension is at least about 20 % as long as a connectorized span of the cable assembly 100, or between about 10 % and about 30% as long as a connectorized span of the cable assembly, excluding the multi-diametrical sealing flexure 60. In other embodiments, the cable engaging portion 62 of the multi-diametrical sealing flexure 60 is at least about 50% as long as the extended cable passageway 42 of the adapter extension 40, or between about 50% and about 400% as long as the extended cable passageway of the adapter extension.

The adapter extension 40 may be fabricated from a material that is characterized by a Young's modulus of between about 80 MPa and about 500 MPa, at room temperature. For example, the adapter extension 40 may be fabricated from a thermoplastic elastomer such as Hytrel® 8238. Reference herein to a component being "fabricated from" a material should be taken to mean that the material takes up at least a majority of the material volume of the part, and often the substantial entirety of the part.

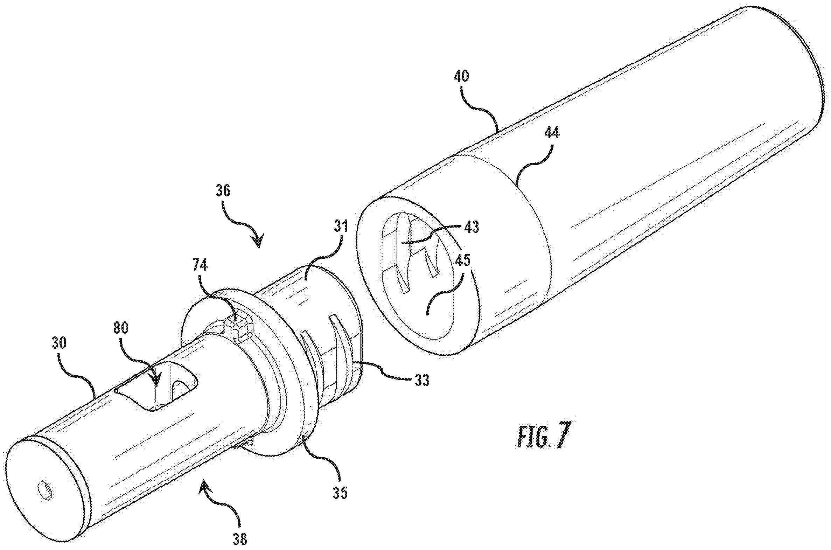

As is illustrated in Fig. 7, the adapter extension 40 may comprise an interior adapter-engaging surface 45 that is rotationally asymmetric relative to a longitudinal axis of the adapter extension 40, i.e., an axis that would extend along the longitudinal axis A of the connector housing 10 illustrated in Fig. 6. In which case, the extension securement portion 36 of the cable adapter 30 would comprise an exterior securement surface 31 that complements the rotational asymmetry of the interior adapter-engaging surface 45 of the adapter extension 40. This asymmetry helps to ensure that the adapter extension 40 and the fiber optic cable running there through, assume a proper rotational orientation relative to the cable adapter 30. To enhance securement, the interior adapter-engaging surface 45 of the adapter extension 40 and the exterior securement surface 31 of the extension securement portion 36 of the cable adapter 30 may comprise complementary locking projections 33 and locking recesses 43. In addition, the adapter extension 40 may comprise a rotationally symmetric an exterior surface 44 that spans a substantial entirety of the adapter extension 40 to enhance the ability of the adapter extension 40 to interface securely with the multi-diametrical sealing flexure 60.

It is contemplated that multi-diametrical sealing flexures according to the present disclosure may be characterized by a Young's modulus of between about 30 MPa and about 80 MPa, at room temperature. For example, and not by way of limitation, multi-diametrical sealing flexures may comprise a heat shrink tube, i.e., a tubular structure and suitable composition that may be shrunk about the remaining parts of the connectorized cable assembly at a temperature that is low enough to avoid heat related damage to the remaining parts of the connectorized cable assembly. For example, it is contemplated that suitable heat shrink tubing may comprise adhesive lined polyolefin 3:1 or 4:1 heat shrink tubing.

Referring to Figs. 4 and 6, the cable engaging portion 62 of the multi-diametrical sealing flexure 60 may be between about 30 and about 100 millimeters in length and the multi-diametrical sealing flexure 60 may comprises a wall thickness that is less than about 1 millimeter, or between about 1 millimeters and about 4 millimeters, over a majority of the length of the cable engaging portion 62 of the multi-diametrical sealing flexure 60. In some embodiments, the cable engaging portion 62 of the multi-diametrical sealing flexure is at least about 20% as long as a connectorized span of the cable assembly 100.

The adapter 30 and adapter extension 40 are illustrated in Figs. 4, 4A, 6, and 7 as two separate components that are secured to each other. It is also contemplated that the adapter extension 40 may be integrated with the cable adapter 30 as a single component, in which case it would be preferable to fabricate the unitary component such that the portion forming the adapter extension 40 is made from a material characterized by a Young's modulus $E_E$ that would be less than the Young's modulus $E_A$ of the portion forming the cable adapter 30. For example, the adapter 30 and adapter extension 40 may be fabricated as a unitary molded part.

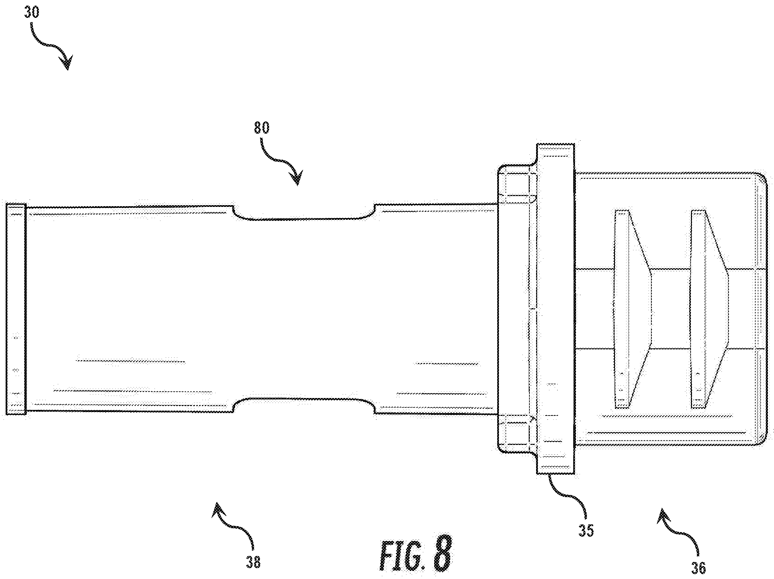

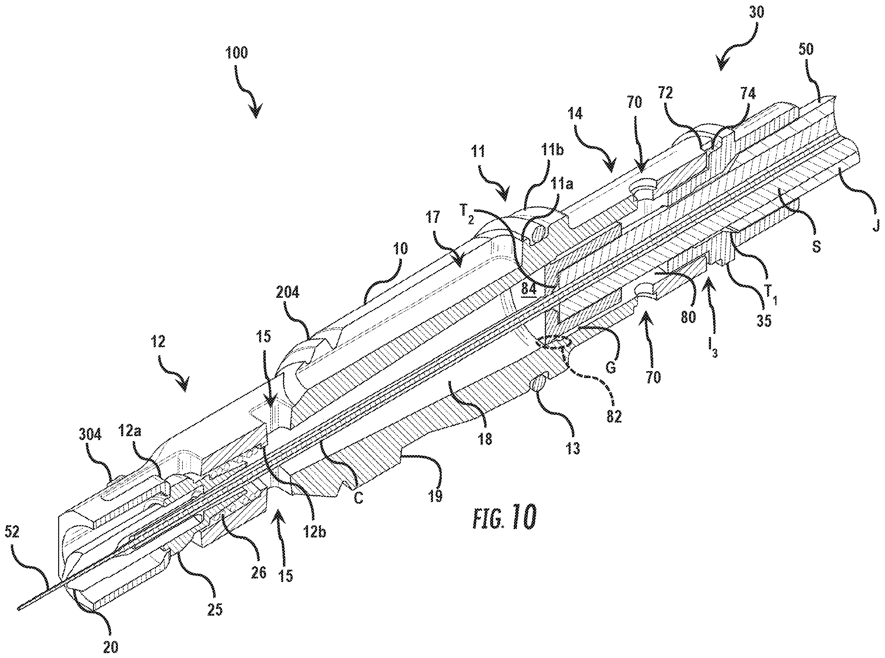

Referring to Figs. 7, 8, 10, and 11, where like elements are denoted with like reference numerals, particular examples which are not part of the present invention, relate specifically to the use of adhesives in connectorization, to the features of the cable adapter 30 and the adapter seating portion 14 of the connector housing 10, and the manner in which these features cooperate to facilitate effective connectorization of a fiber optic cable assembly. Fig. 10 illustrates the connectorized fiber optic cable assembly 100 of Fig. 1 from a different perspective, and without a multi-diametrical sealing flexure, to help clarify the nature of particular components of the assembly. More specifically, in Fig. 10, the fiber optic connector portion of the cable assembly 100 comprises a connector housing 10 with a ferrule retaining portion 12 and an adapter seating portion 14, as is described above. Fig. 10 also shows adhesive injection ports 70 in the adapter seating portion 14 of the connector housing 10, which ports extend through the wall of the connector housing 10, i.e., from an outer surface of the connector housing 10 to an inner surface of the connector housing 10, and permit the pressurized or non-pressurized introduction of adhesive into an interior potting cavity of the connector housing 10.

Referring specifically to Figs. 10 and 11, as is noted above, the cable adapter comprises an optical cable passageway 32, an optical fiber passageway 34, and a housing insert portion 38 that is structurally configured to be seated in the adapter seating portion 14 of the connector housing 10. The optical cable passageway 32 of the cable adapter 30 is preferably large enough to accommodate a jacketed portion J of a fiber optic cable 50. The optical fiber passageway 34 of the cable adapter 30 is smaller than the optical cable passageway 32 and is large enough to accommodate a coated and/or buffered optical fiber C and any longitudinal strength members S running with the coated optical fiber C. In this context, the optical cable passageway 32 may be provided with a stripped cable transition $T_1$ to a reduced interior cross section that is large enough to accommodate a stripped optical cable. Similarly, the optical fiber passageway 34 may be provided with an optical fiber transition $T_2$ to a reduced interior cross section comprising an optical fiber port that is large enough to accommodate a coated optical fiber.

It is contemplated that the above-noted cable adapter passageways can be sized and shaped to accommodate a variety of fiber optic cables including, for example, a single fiber cable of the type illustrated in Fig. 10. In one embodiment, for a coated optical fiber having an OD of about 900 $\mu$m (micrometers), the optical fiber aperture of the cable adapter will have an ID of about 950 $\mu$m, to provide about 50 $\mu$m of free space about the coated optical fiber. Similarly, the optical fiber passageway will be large enough to provide up to about 200 $\mu$m of free space about the optical fiber and associated strength members. The reduced interior cross section of the optical cable passageway will be large enough to provide up to about 300 $\mu$m of free space about the stripped cable portion, and the larger portion of the optical cable passageway will provide up to about 300 $\mu$m of free space about the jacketed fiber optic cable.

Fig. 10 also illustrates the provision of a pair of opposed fiber clamping windows 15 in the connector housing 10. These clamping windows 15 provide a clear path to the coated/buffered portion C of the optical fiber 52 inside the connector housing 10, between the fiber buckling chamber 18 and the ferrule retaining portion 12 of the connector housing 10 to facilitate fiber clamping during ferrule or ferrule holder installation. More specifically, the optical fiber 52 may be clamped in a suitable manner through these opposing windows 15 as the ferrule 20 and/or ferrule holder 25 is inserted into housing and installed on the end of the optical fiber 52. Clamping the optical fiber 52 in this manner helps prevent the optical fiber 52 from being pushed rearward or buckling as the ferrule 20 and/or ferrule holder 25 is installed.

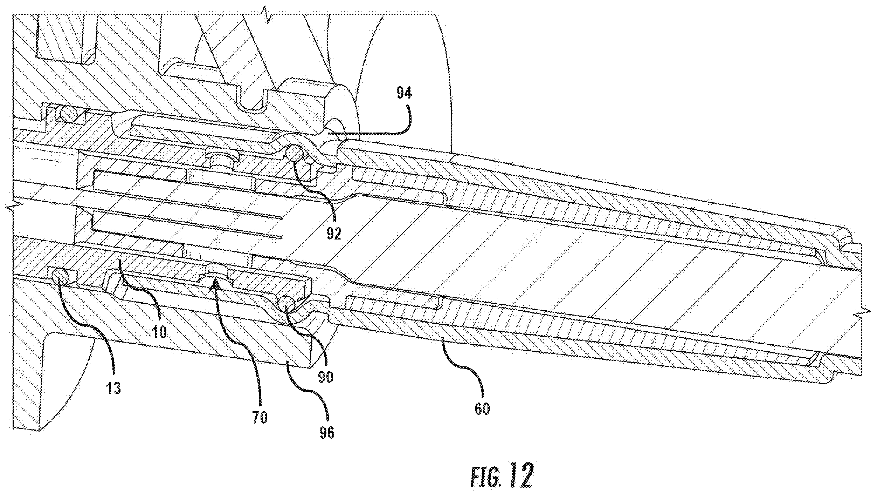

Fig. 12 illustrates the provision of a subcutaneous sealing element 90 between an outer surface of the connector housing 10 and an inner surface of the multi-diametrical sealing flexure 60. The subcutaneous sealing element 90 may be presented as an O-ring or other type of sealing element, may bound an entire rotational periphery of the connector housing 10 about the longitudinal axis A of the connector housing 10, and may cooperate with the multi-diametrical sealing flexure 60 to form an annular projection 94 in an outer surface of the multi-diametrical sealing flexure 60. The outer surface of the connector housing 10 may be provided with a seal accommodating groove 92 may be formed in the outer surface of the connector housing 10 to receive and secure the subcutaneous sealing element 90 beneath the multi-diametrical sealing flexure 60. As is illustrated in Fig. 12, this sealing element 90 can be used to create a continuous, sealed interference fit between the connectorized portion of the cable assembly and the port structure 96 with which it is to be coupled to keep dirt and debris from lodging in the circumferential gap between the connector and the port.

Figs. 7, 8, 10, and 11 most clearly show an adhesive window 80 in the housing insert portion 38 of the cable adapter 30. This adhesive window 80 communicates with the optical fiber passageway 34 of the cable adapter 30 to provide a path for injecting an adhesive through one or both of the adhesive injection port 70, into the adhesive window 80, to secure the cable adapter 30 in the connector housing 10 and to secure the optical fiber 52, and any associated cable components in the housing insert portion 38 of the cable adapter 30.

The adhesive window 80 should be large enough to provide clearance for adhesive introduced into one or both of the injection ports 70 to pass across at least a portion of the optical fiber passageway 34 of the cable adapter 30 when a stripped portion of a fiber optic cable 50 extends along the optical fiber passageway 34. In particular embodiments, including the illustrated embodiment, the adhesive window 80 extends across the entirety, or at least a majority, of the cable adapter 30 in a crossing direction that is orthogonal to the optical fiber passageway 34 of the cable adapter 30. The adhesive window 80 also extends orthogonally to the crossing direction and the optical fiber passageway 34 to a lateral depth that is large enough to reduce the outer wall thickness of the cable adapter 30. This enlarges a portion the optical fiber passageway 34 to form a fiber potting portion in the optical fiber passageway where a substantial amount of adhesive can be held and cured to secure the optical fiber 52 and any associated cable components in the expanded space, in the cable adapter 30. In particular embodiments, it is contemplated that the lateral depth reduces the outer wall thickness of the cable adapter 30 in the fiber potting portion of the optical fiber passageway 34 by between about 0.3 millimeters and about 0.8 millimeters.

To facilitate the aforementioned pressurized or non-pressurized adhesive injection, the cable adapter 30 and the connector housing 10 can be structurally configured to form complementary keying surfaces that are positioned to align the adhesive injection ports 70 of the connector housing 10 with the adhesive window 80 of the cable adapter 30. More specifically, complementary keying surfaces may be formed where the adapter abutment 35 contacts the abutment facing surface 16 of the connector housing by, for example, providing a keyed cut-out 72 in the connector housing 10 and a keyed projection 74 in the cable adapter 30.

Fig. 11 and, to some extent, Fig. 10 show how an interior surface of the connector housing 10 and an exterior surface of the cable adapter 30 can be fashioned to form a capillary gap G when the housing insert portion 38 of the cable adapter 30 is seated in the adapter seating portion 14 of the connector housing 10. This capillary gap G is illustrated in Figs. 10 and 11 as an annular gap that is interrupted by the adhesive injection ports 70 of the connector housing 10 and the adhesive window 80 of the cable adapter 30. Even if the capillary gap G is not an annular gap, it may be displaced from and extend parallel to the longitudinal axis of the connector housing 10, which runs coaxially with the core of the optical fiber 52.

The capillary gap G is formed between an expanded inner dimension of the connector housing 10 and a restricted outer dimension of the cable adapter 30. It is, however, contemplated that a suitable capillary gap G may be formed by merely restricting the inner dimension of the connector housing 10 or the outer dimension of the cable adapter 30. Although the preferred size of the capillary gap will be dependent on the particular adhesive in use, it is contemplated that suitable gap spacings will, in many case, be less than about 0.15 millimeters for a majority of the extent of the gap, or between about 0.1 millimeters and about 0.3 millimeters for a majority of the extent of the gap. Preferred gap lengths will also depend on the particular adhesive in use, but it is contemplated that a suitable gaps will extend at least about 3 millimeters, or between about 3 millimeters and about 15 millimeters, parallel to the longitudinal axis.

Regardless of whether connectorized fiber optic cable assemblies according to the present disclosure utilize a capillary gap G, it is noted that, for optimum adhesion, an adhesive should thoroughly "wet out" the surfaces of the connector assembly to be bonded. In other words, the adhesive should flow and cover the surfaces to maximize the contact area and the attractive forces between the adhesive and bonding surfaces. Lower surface energy materials tend to spontaneously wet out higher energy surfaces. For a liquid adhesive to effectively wet out a surface, the surface energy of the adhesive should be as low, or lower than, the surface energy of the surfaces of the substrates to be bonded. If the liquid surface energy is significantly above that of the substrate surface, the substrate does not wet as well. Substrates to be bonded may be fabricated from materials, like ABS plastics, having relatively high surface energies. Alternatively, the surface of a relatively low surface energy material, like polypropylene or polyethylene, may be treated to increase the surface energy by, for example, exposing the surface to UV light, etching the surface, and/or treating the surface with a solvent.

Referring further to Figs. 10 and 11, the capillary gap G is displaced from and extends parallel to the longitudinal axis of the connector housing from the adapter sealing interface $I_3$ to an adhesive barrier 82 formed by portions of the cable adapter 30 and the connector housing 10 when the housing insert portion 38 of the cable adapter 30 is seated in the adapter seating portion 14 of the connector housing 10. The adhesive barrier can be positioned between the capillary gap G and the ferrule retaining portion 12 of the connector housing, between the capillary gap G and a fiber buckling chamber 18 of the connector housing 10, or both, to help preserve the integrity of the optical coupling at the ferrule 20.

For annular capillary gaps G, this adhesive barrier 82 is also annular. The adhesive barrier 82 can be formed at a press-fit engagement interface between respective surfaces of the cable adapter 30 and the connector housing 10. This type of press-fit engagement can be facilitated by restricting the inner dimension of the connector housing, expanding the outer dimension of the cable adapter, or both.

The adhesive injection ports 70 and the adhesive window 80 can be positioned between the adapter sealing interface $I_3$ and the adhesive barrier 82 to help facilitate uniform distribution of the injected adhesive.

To maintain the integrity of the adhesive barrier 82 and permit passage of the optical fiber 52, the cable adapter 30 also comprises a fiber admitting face 84 extending across an interior dimension of the annular adhesive barrier 82 and comprising an optical fiber aperture 86. The optical fiber aperture 86 is designed to closely approximate the size and shape of the external profile of the optical fiber portion of the connectorized optical cable. For example, and not by way of limitation, for single fiber cables, the optical fiber aperture will have a diameter of between about 250 $\mu$m and about 1 millimeters, depending on whether the fiber is coated and/or buffered. The adapter sealing interface $I_3$, the adhesive barrier 82, and the fiber admitting face 84 collectively form a closed end of the connector housing when the cable adapter 30 is seated in the adapter seating portion 14 of the connector housing 10.

To help facilitate uniform adhesive injection through one or both of the adhesive injection ports 70, the connector housing 10 may be provided with a relief port in the adapter seating portion 14 of the connector housing 10. In one example which are not part of the present invention, adhesive is injected through only one of the injection ports 70 and the remaining injection port serves as the relief port - allowing air inside the connector assembly to escape when adhesive is injected. In another example which are not part of the present invention, the relief port is provided along a portion of the adapter sealing interface $I_3$, for example by providing relief gaps between the keyed cut-out 72 and the keyed projection 74.

Referring to Figs. 10 and 12, which are not part of the present invention, it is contemplated that the adhesive injection ports 70 of the connector housing 10 may be positioned to ensure that any excess adhesive or other surface irregularities created on the outer surface of the connector housing 10 when adhesive is injected into an interior potting cavity of the connector housing 10 through the adhesive injection ports 70 will not interfere with the keying or sealing functionality of the connectorized cable assembly 100 when it is engaged with a suitable port structure 96. It may also be advantageous to ensure that the adhesive injection ports 70 are positioned to prevent adhesive interference with the ferrule retaining portion 12 of the connector housing 10, and the ferrule 20, ferrule holder 25, and ferrule retention spring 26 incorporated therein. It may be further advantageous to ensure that the adhesive injection ports 70 are positioned to prevent adhesive interference with conversion housing engagement features, in embodiments where such features are provided on the connector housing 10. This positioning can be significant in examples that utilize a cable adapter 30, and embodiments of the present disclosure where a cable adapter 30 and an adapter extension 40 are not needed.

More specifically, referring to Figs. 10 and 12, the connector housing comprises ferrule retention features 12a, 12b in the ferrule retaining portion 12 of the connector housing, a keying feature 17 defined as a longitudinally oriented cut-out on an outer surface of the connector housing 10 in a keying portion of the connector housing, and sealing element retaining features 11a, 11b defined on the outer surface of the connector housing 10 in a sealing element retaining portion of the connector housing. The keying portion of the connector housing 10 is structurally configured to inhibit rotation of the connector housing 10 about the longitudinal axis when the housing 10 is engaged with a complementary keying portion of the port structure 96. The sealing element retention features 11a, 11b are structurally configured to help retain a sealing element 13 therein. The sealing element 13 may, for example, comprise an O-ring, and is designed to cooperate with an inner surface of the port structure 96 to help create a sealed engagement with the port structure 96 in the manner illustrated in Fig. 12.

The adhesive injection ports 70 are defined in a potting portion of the connector housing and extend from the outer surface of the connector housing 10 to an inner surface of the connector housing 10 to communicate with an interior potting cavity of the connector housing 10. In this embodiment, the adhesive injection ports 70 are positioned rearwardly of the ferrule retaining portion 12, the keying feature 17, and the sealing element retention features 11a, 11b. Stated differently, the adhesive injection ports 70 are separated from the ferrule retaining portion 12 of the connector housing 10 and the keying portion of the connector housing 10 by the sealing element retaining portion of the connector housing 10, along the longitudinal axis of the connector housing 10.

In particular examples which are not part of the present invention, the connector housing 10 may further comprises a locking portion comprising a locking feature 19 that is defined on the outer surface of the connector housing 10 and is designed to inhibit axial movement of the connector housing 10 along a retracting direction of the fiber optic connector when the connectorized cable assembly 100 is engaged with a complementary securing member of a complementary port structure 96. In these embodiments, the adhesive injection ports 70 will be separated from the locking portion of the connector housing by the sealing element retaining portion of the connector housing 10, along the longitudinal axis of the connector housing 10, to help ensure that any excess adhesive or other surface irregularities created on the outer surface of the connector housing 10 when adhesive is injected into the interior potting cavity of the connector housing 10 through the adhesive injection ports 70 will not interfere with the locking functionality of the locking feature 19.

Referring to Figs. 1-3, in addition to Figs. 10 and 12, the connector housing 10 may comprise conversion housing engagement features. For example, the connector housing 10 may comprise a first type of engagement feature 204, in the form of an external threaded portion on the conversion housing 10, for interfacing with a complementary threaded portion of hardened conversion housing 200. The connector may also comprise a second type of engagement feature 304, in the form of tabs or slots near the ferrule retaining portion 12 of the conversion housing 10, for interfacing with a type SC conversion housing 300. In these embodiments, the adhesive injection ports 70 may be separated from the conversion housing engagement features 204, 304 by the sealing element retaining portion of the connector housing 10, along the longitudinal axis of the connector housing 10, to help ensure that any excess adhesive or other surface irregularities created on the outer surface of the connector housing 10 when adhesive is injected into the interior potting cavity of the connector housing 10 through the adhesive injection ports 70 will not interfere with proper engagement with the conversion housings 200, 300.

As is illustrated in Figs. 10 and 12, the keying feature 17, the sealing element retention features 11a, 11b, the ferrule retention features 12a, 12b, and the locking feature 19 may be defined in the connector housing 10 in a variety of ways including, for example, as projections, depressions, or cut-outs, formed on or in an outer or inner surface of the connector housing 10, through the connector housing 10, or combinations thereof.

It is noted that recitations herein of a component of the present disclosure being "structurally configured" in a particular way, to embody a particular property, or to function in a particular manner, are structural recitations, as opposed to recitations of intended use. More specifically, reference herein to the manner in which a component is "structurally configured" denotes an existing physical condition of the component and, as such, is to be taken as a definite recitation of the structural characteristics of the component.

It is noted that terms like "preferably," "commonly," and "typically," when utilized herein, are not utilized to limit the scope of the claimed invention or to imply that certain features are critical, essential, or even important to the structure or function of the claimed invention. Rather, these terms are merely intended to identify particular aspects of an embodiment of the present disclosure or to emphasize alternative or additional features that may or may not be utilized in a particular embodiment of the present disclosure.

For the purposes of describing and defining the present invention it is noted that the terms "substantially" and "about" are utilized herein to represent the inherent degree of uncertainty that may be attributed to any quantitative comparison, value, measurement, or other representation. The terms "substantially" and "about" are also utilized herein to represent the degree by which a quantitative representation may vary from a stated reference without resulting in a change in the basic function of the subject matter at issue.

Having described the subject matter of the present disclosure in detail and by reference to specific embodiments thereof, it is noted that the various details disclosed herein should not be taken to imply that these details relate to elements that are essential components of the various embodiments described herein, even in cases where a particular element is illustrated in each of the drawings that accompany the present description.

It is noted that one or more of the following claims utilize the term "wherein" as a transitional phrase. For the purposes of defining the present invention, it is noted that this term is introduced in the claims as an open-ended transitional phrase that is used to introduce a recitation of a series of characteristics of the structure and should be interpreted in like manner as the more commonly used open-ended preamble term "comprising."

**Claims**

1. A connectorized fiber optic cable assembly (100) comprising:

a connector housing (10) comprising a ferrule retaining portion (12), an adapter seating portion (14), and a longitudinal axis extending through the ferrule retaining portion (12) of the connector housing (10) and the adapter seating portion (14) of the connector housing (10), wherein the connector housing (10) has a Young's modulus $E_H$;

a ferrule (20) retained by the ferrule retaining portion (12) of the connector housing (10), the ferrule (20) comprising an optical fiber bore (22);

a cable adapter (30) comprising an optical cable passageway (32), an optical fiber passageway (34), an extension securement portion (36), a housing insert portion (38) seated in the adapter seating portion (14) of the connector housing (10), and an adapter abutment (35) positioned between the extension securement portion (36) and the housing insert portion (38), wherein the adapter abutment (35) limits an extent to which the cable adapter (30) extends into the adapter seating portion (14) of the connector housing (10), wherein the cable adapter (30) has a Young's modulus $E_A$, which is less than the Young's modulus $E_H$ of the connector housing (10);

an adapter extension (40) secured to the extension securement portion (36) of the cable adapter (30) and comprising an extended cable passageway (42), wherein the adapter extension (40) has a Young's modulus $E_E$ of between 80 MPa and 500 MPa, at room temperature, which is less than the Young's modulus $E_A$ of the cable adapter (30);

a fiber optic cable (50) extending along the extended cable passageway (42) of the adapter extension (40) and the optical cable passageway (32) of the cable adapter (30), the fiber optic cable (50) comprising an optical fiber (52) extending along optical fiber passageway (34) of the cable adapter (30) to the optical fiber bore (22) of the ferrule (20); and

a multi-diametrical sealing flexure (60) comprising a cable engaging portion (62) engaging an outer cable surface of the fiber optic cable (50), a housing engaging portion (64) engaging an outer housing surface of the connector housing (10), and an intermediate flexure portion (66) extending from the cable engaging portion (62) to the housing engaging portion (64) and engaging an outer extension surface (44) of the adapter extension (40), wherein the multi-diametrical sealing flexure (60) has a Young's modulus $E_F$ of between 30 MPa and 80 MPa, at room temperature, which is less than the Young's modulus $E_E$ of the adapter extension (40).

2. The connectorized fiber optic cable assembly (100) of claim 1, wherein the cable assembly comprises a multicomponent bending stiffness profile comprising a first bending index value B1 at a free end of the extension securement portion (36) of the cable adapter (30), a second bending index value B2 at a free end of the adapter extension (40), and a third bending index value B3 at a free end of the multi-diametrical sealing flexure (60), where B1 > *B2* > *B3*.

3. The connectorized fiber optic cable assembly (100) of claim 1 or 2, wherein:

the connectorized fiber optic cable assembly (100) comprises a cable entry interface ($I_1$), an adapter abutment interface ($I_2$), and an adapter sealing interface ($I_3$);

the cable entry interface ($I_1$) is formed by an inner surface of the extended cable passageway (42) of the adapter extension (40) and an outer surface of the fiber optic cable (50), where the fiber optic cable (50) extends into the extended cable passageway (42) of the adapter extension (40) towards the ferrule (20);

the adapter abutment interface ($I_2$) is formed by the adapter extension (40) and the adapter abutment (35) of the cable adapter (30), where the adapter extension (40) contacts an extension-facing surface of the adapter abutment (35);

the adapter sealing interface ($I_3$) is formed by the adapter abutment (35) and the connector housing (10), where the adapter abutment (35) contacts an abutment facing surface of the connector housing (10); and

the multi-diametrical sealing flexure (60) forms respective sealing bridges across the cable entry interface ($I_1$), the adapter abutment interface ($I_2$), and the adapter sealing interface ($I_3$).

**4.** The connectorized fiber optic cable assembly (100) of claim 3, wherein:

the adapter abutment interface ($I_2$) and the adapter sealing interface ($I_3$) are orthogonal to the longitudinal axis of the connector housing (10); and
the cable entry interface ($I_1$) is displaced from and oriented in a common direction as the longitudinal axis of the connector housing (10).

**5.** The connectorized fiber optic cable assembly (100) of claim 3, wherein:

the cable entry interface ($I_1$) originates at a cable-to-connector elbow;
the adapter sealing interface ($I_3$) originates at a housing-to-adapter elbow;
the cable-to-connector elbow and the housing-to-adapter elbow are oriented in opposite directions relative to the longitudinal axis; and
the multi-diametrical sealing flexure (60) forms respective sealing bridges across the cable-to-connector elbow and the oppositely directed housing-to-adapter elbow.

**6.** The connectorized fiber optic cable assembly (100) of claim 5 wherein the housing-to-adapter elbow comprises an exposed anchoring face oriented towards the ferrule retaining portion (12) of the connector housing (10).

**7.** The connectorized fiber optic cable assembly (100) of any of claims 1-6, wherein:

the optical fiber passageway is positioned along the longitudinal axis between the optical cable passageway (32) of the cable adapter (30) and the ferrule (20); and
the optical cable passageway (32) of the cable adapter (30) is larger than the optical fiber passageway of the cable adapter (30).

**8.** The connectorized fiber optic cable assembly (100) of any of claims 1-6, wherein:

the housing insert portion (38) of the cable adapter (30) extends from the adapter abutment (35) along the longitudinal axis towards the ferrule (20) for a seated length $d_s$;
the extension securement portion (36) of the cable adapter (30) extends from the adapter abutment (35) in an opposite direction along the longitudinal axis for an extension receiving length $d_R$; and

$$d_R < d_S.$$

**9.** The connectorized fiber optic cable assembly (100) of any of claims 1-6, wherein:

the extended cable passageway (42) of the adapter extension (40) is between 15 millimeters and 30 millimeters in length; and
the adapter extension (40) comprises a wall thickness that is between 1 millimeter and 4 millimeters over a majority of the length of the extended cable passageway (42) of the adapter extension (40).

**10.** The connectorized fiber optic cable assembly (100) of any of claims 1-6, wherein the extended cable passageway (42) of the adapter extension (40) is at least 10% as long as a connectorized span of the cable assembly, excluding the multi-diametrical sealing flexure (60).

**11.** The connectorized fiber optic cable assembly (100) of any of claims 1-6, wherein:

the adapter extension (40) comprises an interior adapter-engaging surface (45) that is rotationally asymmetric relative to the longitudinal axis; and
the extension securement portion (36) of the cable adapter (30) comprises an exterior surface that complements the rotational asymmetry of the interior adapter-engaging surface (45) of the adapter extension (40).

**12.** The connectorized fiber optic cable assembly (100) of any of claims 1-6, wherein the connectorized fiber optic cable assembly (100) further comprises a subcutaneous sealing element positioned between an outer surface of the connector housing (10) and an inner surface of the multi-diametrical sealing flexure (60).

**13.** A method of connectorizing a fiber optic cable (50), the method comprising:

providing a connector housing (10) comprising a ferrule retaining portion (12), an adapter seating portion (14), and a longitudinal axis extending through the ferrule retaining portion (12) of the connector housing (10) and the adapter seating portion (14) of the connector housing (10), wherein the connector housing (10) has a Young's modulus $E_H$;
retaining a ferrule (20) in the ferrule retaining portion (12) of the connector housing (10), the ferrule (20) comprising an optical fiber bore (22);
providing a cable adapter (30) comprising an optical cable passageway (32), an optical fiber passageway (34), an extension securement portion (36), a housing insert portion (38), and an adapter abutment (35) positioned between the extension securement portion (36) and the housing insert portion (38), wherein the cable adapter (30) has a Young's modulus $E_A$, which is less than the Young's modulus $E_H$ of the connector housing (10);

seating the cable adapter (30) in the adapter seating portion (14) of the connector housing (10), wherein the adapter abutment (35) limits an extent to which the cable adapter (30) extends into the adapter seating portion (14) of the connector housing (10);

securing an adapter extension (40) to the extension securement portion (36) of the cable adapter (30), wherein the adapter extension (40) comprises an extended cable passageway (42), wherein the adapter extension (40) has a Young's modulus $E_E$ of between 80 MPa and 500 MPa, at room temperature, which is less than the Young's modulus $E_A$ of the cable adapter (30);

extending a fiber optic cable (50) along the extended cable passageway (42) of the adapter extension (40) and the optical cable passageway (32) of the cable adapter (30), the fiber optic cable (50) comprising an optical fiber extending along optical fiber passageway of the cable adapter (30) to the optical fiber bore (22) of the ferrule (20); and

engaging an outer cable surface of the fiber optic cable (50), an outer housing surface of the connector housing (10), and an outer extension surface (44) of the adapter extension (40) with a multi-diametrical sealing flexure (60) comprising a cable engaging portion (62), a housing engaging portion (64), and an intermediate flexure portion (66) extending from the cable engaging portion (62) to the housing engaging portion (64), wherein the multi-diametrical sealing flexure (60) has a Young's modulus $E_F$ of between 30 MPa and 80 MPa, at room temperature, which is less than the Young's modulus $E_E$ of the adapter extension (40).

## Patentansprüche

1. Konfektionierte faseroptische Kabelanordnung (100), aufweisend:

ein Verbindergehäuse (10), aufweisend einen Ferrulenhalteabschnitt (12), einen Adaptersitzabschnitt (14) und eine Längsachse, die sich durch den Ferrulenhalteabschnitt (12) des Verbindergehäuses (10) und den Adaptersitzabschnitt (14) des Verbindergehäuses (10) hindurch erstreckt, wobei das Verbindergehäuse (10) einen Youngschen Modul $E_H$ hat;

eine Ferrule (20), die durch den Ferrulenhalteabschnitt (12) des Verbindergehäuses (10) gehalten wird, wobei die Ferrule (20) eine Lichtleiterfaserbohrung (22) aufweist;

einen Kabeladapter (30), aufweisend einen Lichtleiterkabeldurchlass (32), einen Lichtleiterfaserdurchlass (34), einen Verlängerungssicherungsabschnitt (36), einen Gehäuseeinsatzabschnitt (38), der in dem Adaptersitzabschnitt (14) des Verbindergehäuses (10) sitzt, und ein Adapterwiderlager (35), das zwischen dem Verlängerungssicherungsabschnitt (36) und dem Gehäuseeinsatzabschnitt (38) positioniert ist, wobei das Adapterwiderlager (35) ein Ausmaß begrenzt, bis zu dem sich der Kabeladapter (30) in den Adaptersitzabschnitt (14) des Verbindergehäuses (10) hinein erstreckt, wobei der Kabeladapter (30) einen Youngschen Modul $E_A$ hat, der kleiner als der Youngsche Modul $E_H$ des Verbindergehäuses (10) ist;

eine Adapterverlängerung (40), die an dem Verlängerungssicherungsabschnitt (36) des Kabeladapters (30) gesichert ist und einen verlängerten Kabeldurchlass (42) aufweist, wobei die Adapterverlängerung (40) einen Youngschen Modul $E_E$ zwischen 80 MPa und 500 MPa bei Raumtemperatur hat, der kleiner als der Youngsche Modul $E_A$ des Kabeladapters (30) ist;

ein Lichtleiterkabel (50), das sich entlang des verlängerten Kabeldurchlasses (42) der Adapterverlängerung (40) und des Lichtleiterkabeldurchlasses (32) des Kabeladapters (30) erstreckt, wobei das Lichtleiterkabel (50) einen Lichtleiter (52) aufweist, der sich entlang des Lichtleiterdurchlasses (34) des Kabeladapters (30) zu der Lichtleiterfaserbohrung (22) der Ferrule (20) erstreckt; und

eine multidiametrale Dichtungsbiegung (60), aufweisend einen Kabeleingriffabschnitt (62), der in Eingriff mit einer Außenkabeloberfläche des Lichtleiterkabels (50) kommt, einen Gehäuseeingriffabschnitt (64), der in Eingriff mit einer Außengehäuseoberfläche des Verbindergehäuses (10) kommt, und einen Zwischenbiegungsabschnitt (66), der sich von dem Kabeleingriffabschnitt (62) zu dem Gehäuseeingriffabschnitt (64) erstreckt und in Eingriff mit einer Außenverlängerungsoberfläche (44) der Adapterverlängerung (40) kommt, wobei die multidiametrale Dichtungsbiegung (60) einen Youngschen Modul $E_F$ zwischen 30 MPa und 80 MPa bei Raumtemperatur hat, was kleiner als der Youngsche Modul $E_E$ der Adapterverlängerung (40) ist.

2. Konfektionierte faseroptische Kabelanordnung (100) nach Anspruch 1, wobei die Kabelanordnung ein mehrkomponentiges Biegesteifheitsprofil aufweist, das einen ersten Biegeindexwert B1 an einem freien Ende des Verlängerungssicherungsabschnitts (36) des Kabeladapters (30), einen zweiten Biegeindexwert B2 an einem freien Ende der Adapterverlängerung (40) und einen dritten Biegeindexwert B3 an einem freien Ende der multidiametralen Dichtungsbiegung (60) aufweist, wobei *B1 > B2 > B3*.

3. Konfektionierte faseroptische Kabelanordnung (100) nach Anspruch 1 oder 2, wobei:

die konfektionierte faseroptische Kabelanordnung (100) eine Kabeleintrittsgrenzfläche ($I_1$), eine Adapterwiderlagergrenzfläche ($I_2$) und eine Adapterdichtungsgrenzfläche ($I_3$) aufweist; die Kabeleintrittsgrenzfläche ($I_1$) durch eine Innenoberfläche des verlängerten Kabeldurchlasses (42) der Adapterverlängerung (40) und eine Außenoberfläche des Lichtleiterkabels (50) gebildet ist, wobei das Lichtleiterkabel (50) sich in den verlängerten Kabeldurchlass (42) der Adapterverlängerung (40) hinein in Richtung der Ferrule (20) erstreckt; die Adapterwiderlagergrenzfläche ($I_2$) durch die Adapterverlängerung (40) und das Adapterwiderlager (35) des Kabeladapters (30) gebildet ist, wobei die Adapterverlängerung (40) eine zu der Verlängerung weisende Oberfläche des Adapterwiderlagers (35) kontaktiert; die Adapterdichtungsgrenzfläche ($I_3$) durch das Adapterwiderlager (40) und das Verbindergehäuse (10) gebildet ist, wobei das Adapterwiderlager (35) eine zu dem Widerlager weisende Oberfläche des Verbindergehäuses (10) kontaktiert; und die multidiametrale Dichtungsbiegung (60) jeweilige Dichtungsbrücken über der Kabeleintrittsgrenzfläche ($I_1$), der Adapterwiderlagergrenzfläche ($I_2$) und der Adapterdichtungsgrenzfläche ($I_3$) bildet.

4. Konfektionierte faseroptische Kabelanordnung (100) nach Anspruch 3, wobei:

die Adapterwiderlagergrenzfläche ($I_2$) und die Adapterdichtungsgrenzfläche ($I_3$) orthogonal zu der Längsachse des Verbindergehäuses (10) sind; und die Kabeleintrittsgrenzfläche ($I_1$) zu der Längsachse des Verbindergehäuses (10) verschoben und in eine gemeinsame Richtung wie diese orientiert ist.

5. Konfektionierte faseroptische Kabelanordnung (100) nach Anspruch 3, wobei:

die Kabeleintrittsgrenzfläche ($I_1$) an einem Ka-

bel-zu-Verbinder-Kniestück ihren Ursprung hat; die Adapterdichtungsgrenzfläche ($I_3$) an einem Gehäuse-zu-Adapter-Kniestück ihren Ursprung hat; das Kabel-zu-Verbinder-Kniestück und das Gehäuse-zu-Adapter-Kniestück in entgegengesetzten Richtungen relativ zu der Längsachse orientiert sind; und die multidiametrale Dichtungsbiegung (60) jeweilige Dichtungsbrücken über dem Kabel-zu-Verbinder-Kniestück und dem entgegengesetzt gerichteten Gehäuse-zu-Adapter-Kniestück bildet.

6. Konfektionierte faseroptische Kabelanordnung (100) nach Anspruch 5, wobei das Gehäuse-zu-Adapter-Kniestück eine exponierte Verankerungsfläche aufweist, die in Richtung des Ferrulenhalteabschnitts (12) des Verbindergehäuses (10) orientiert ist.

7. Konfektionierte faseroptische Kabelanordnung (100) nach einem der Ansprüche 1 bis 6, wobei:

der Lichtleiterfaserdurchlass entlang der Längsachse zwischen dem Lichtleiterkabeldurchlass (32) des Kabeladapters (30) und der Ferrule (20) positioniert ist; und der Lichtleiterkabeldurchlass (32) des Kabeladapters (30) größer als der Lichtleiterfaserdurchlass des Kabeladapters (30) ist.

8. Konfektionierte faseroptische Kabelanordnung (100) nach einem der Ansprüche 1 bis 6, wobei:

der Gehäuseeinsatzabschnitt (38) des Kabeladapters (30) sich für eine sitzende Länge $d_S$ von dem Adapterwiderlager (35) entlang der Längsachse in Richtung der Ferrule (20) erstreckt; der Verlängerungssicherungsabschnitt (36) des Kabeladapters (30) sich für eine Verlängerung aufnehmende Länge $d_R$ von dem Adapterwiderlager (35) in eine entgegengesetzte Richtung entlang der Längsachse erstreckt; und

$$d_R < d_S.$$

9. Konfektionierte faseroptische Kabelanordnung (100) nach einem der Ansprüche 1 bis 6, wobei:

der verlängerte Kabeldurchlass (42) der Adapterverlängerung (40) zwischen 15 Millimeter und 30 Millimeter Länge beträgt; und die Adapterverlängerung (40) eine Wanddicke, die zwischen 1 Millimeter und 4 Millimeter liegt, über einen größeren Teil der Länge des verlängerten Kabeldurchlasses (42) der Adapterverlängerung aufweist.

10. Konfektionierte faseroptische Kabelanordnung (100) nach einem der Ansprüche 1 bis 6, wobei der verlängerte Kabeldurchlass (42) der Adapterverlängerung (40) zumindest 10 % so lang wie eine konfektionierte Spanne der Kabelanordnung unter Ausschluss der multidiametralen Dichtungsbiegung (60) ist.

11. Konfektionierte faseroptische Kabelanordnung (100) nach einem der Ansprüche 1 bis 6, wobei:

die Adapterverlängerung (40) eine innere Adaptereingriffoberfläche (45) aufweist, die rotationsasymmetrisch relativ zu der Längsachse ist; und der Verlängerungssicherungsabschnitt (36) des Kabeladapters (30) eine äußere Oberfläche aufweist, welche komplementär zu der Rotationsasymmetrie der inneren Adaptereingriffoberfläche (45) der Adapterverlängerung (40) ist.

12. Konfektionierte faseroptische Kabelanordnung (100) nach einem der Ansprüche 1 bis 6, wobei die konfektionierte faseroptische Kabelanordnung (100) des Weiteren ein subkutanes Dichtungselement aufweist, das zwischen einer Außenoberfläche des Verbindergehäuses (10) und einer Innenoberfläche der multidiametralen Dichtungsbiegung (60) positioniert ist.

13. Verfahren zum Konfektionieren eines faseroptischen Kabels (50), wobei das Verfahren aufweist:

Bereitstellen eines Verbindergehäuses (10), aufweisend einen Ferrulenhalteabschnitt (12), einen Adaptersitzabschnitt (14) und eine Längsachse, die sich durch den Ferrulenhalteabschnitt (12) des Verbindergehäuses (10) und den Adaptersitzabschnitt (14) des Verbindergehäuses (10) hindurch erstreckt, wobei das Verbindergehäuse (10) einen Youngschen Modul $E_H$ aufweist; Halten einer Ferrule (20) in dem Ferrulenhalteabschnitt (12) des Verbindergehäuses (10), wobei die Ferrule (20) eine Lichtleiterfaserbohrung (22) aufweist; Bereitstellen eines Kabeladapters (30), aufweisend einen Lichtleiterkabeldurchlass (32), einen Lichtleiterfaserdurchlass (34), einen Verlängerungssicherungsabschnitt (36), einen Gehäuseeinsatzabschnitt (38) und ein Adapterwiderlager (35), das zwischen dem Verlängerungssicherungsabschnitt (36) und dem Gehäuseeinsatzabschnitt (38) positioniert ist, wobei der Kabeladapter (30) einen Youngschen Modul $E_A$ hat, der kleiner als der Youngsche Modul $E_H$ des Verbindergehäuses (10) ist;

Setzen des Kabeladapters (30) in den Adaptersitzabschnitt (14) des Verbindergehäuses (10), wobei das Adapterwiderlager (35) ein Ausmaß begrenzt, bis zu dem der Kabeladapter (30) sich in den Adaptersitzabschnitt (14) des Verbindergehäuses (10) hinein erstreckt; Sichern einer Adapterverlängerung (40) an dem Verlängerungssicherungsabschnitt (36) des Kabeladapters (30), wobei die Adapterverlängerung (40) einen verlängerten Kabeldurchlass (42) aufweist, wobei die Adapterverlängerung (40) einen Youngschen Modul $E_E$ zwischen 80 MPa und 500 MPa bei Raumtemperatur hat, der kleiner als der Youngsche Modul $E_A$ des Kabeladapters (30) ist; Verlängern eines Lichtleiterkabels (50) entlang des verlängerten Kabeldurchlasses (42) der Adapterverlängerung (40) und des Lichtleiterkabeldurchlasses (32) des Kabeladapters (30), wobei das Lichtleiterkabel (50) einen Lichtleiter aufweist, der sich entlang des Lichtleiterdurchlasses des Kabeladapters (30) zu der Lichtleiterfaserbohrung (22) der Ferrule (20) erstreckt; und In-Eingriff-bringen einer Außenkabeloberfläche des Lichtleiterkabels (50), einer Außengehäuseoberfläche des Verbindergehäuses (10) und einer Außenverlängerungsoberfläche (44) der Adapterverlängerung (40) mit einer multidiametralen Dichtungsbiegung (60), die einen Kabeleingriffabschnitt (62), einen Gehäuseeingriffabschnitt (64) und einen Zwischenbiegungsabschnitt (66) aufweist, der sich von dem Kabeleingriffabschnitt (62) zu dem Gehäuseeingriffabschnitt (64) erstreckt, wobei die multidiametrale Dichtungsbiegung (60) einen Youngschen Modul $E_F$ zwischen 30 MPa und 80 MPa bei Raumtemperatur aufweist, was kleiner als der Youngsche Modul $E_E$ der Adapterverlängerung (40) ist.

**Revendications**

1. Ensemble de câble à fibres optiques connectorisé (100) comprenant :

un boîtier de connecteur (10) comprenant une partie de retenue de virole (12), une partie de logement d'adaptateur (14), et un axe longitudinal s'étendant à travers la partie de retenue de virole (12) du boîtier de connecteur (10) et la partie de logement d'adaptateur (14) du boîtier de connecteur (10), le boîtier de connecteur (10) ayant un module de Young $E_H$ ; une virole (20) retenue par la partie de retenue de virole (12) du boîtier de connecteur (10), la virole (20) comprenant un alésage de fibre optique (22) ;

un adaptateur de câble (30) comprenant un passage de câble optique (32), un passage de fibre optique (34), une partie de fixation d'extension (36), une partie d'insertion de boîtier (38) logée dans la partie de logement d'adaptateur (14) du boîtier de connecteur (10), et une butée d'adaptateur (35) positionnée entre la partie de fixation d'extension (36) et la partie d'insertion de boîtier (38), la butée d'adaptateur (35) limitant une étendue à laquelle l'adaptateur de câble (30) s'étend dans la partie de logement d'adaptateur (14) du boîtier de connecteur (10), l'adaptateur de câble (30) ayant un module de Young $E_A$, qui est inférieur au module de Young $E_H$ du boîtier de connecteur (10) ;

une rallonge d'adaptateur (40) fixée à la partie de fixation d'extension (36) de l'adaptateur de câble (30) et comprenant un passage de câble étendu (42), la rallonge d'adaptateur (40) ayant un module de Young $E_E$ compris entre 80 MPa et 500 MPa, à température ambiante, qui est inférieur au module de Young $E_A$ de l'adaptateur de câble (30),

un câble à fibre optique (50) s'étendant le long du passage de câble étendu (42) de la rallonge d'adaptateur (40) et du passage de câble optique (32) de l'adaptateur de câble (30), le câble à fibre optique (50) comprenant une fibre optique (52) s'étendant le long du passage de fibre optique (34) de l'adaptateur de câble (30) jusqu'à l'alésage de fibre optique (22) de la virole (20), et

une flexion d'étanchéité multidiamétrique (60) comprenant une partie de mise en prise de câble (62) venant en prise dans une surface de câble externe du câble à fibre optique (50), une partie de mise en prise de boîtier (64) venant en prise dans une surface de boîtier externe du boîtier de connecteur (10), et une partie de flexion intermédiaire (66) s'étendant de la partie de mise en prise de câble (62) à la partie de mise en prise de boîtier (64) et venant en prise avec une surface d'extension externe (44) de la rallonge d'adaptateur (40), la flexion d'étanchéité multidiamétrique (60) ayant un module de Young $E_F$ compris entre 30 MPa et 80 MPa, à température ambiante, qui est inférieur au module de Young $E_E$ de la rallonge d'adaptateur (40).

2. Ensemble de câble à fibres optiques connectorisé (100) selon la revendication 1, l'ensemble de câble comprenant un profil de rigidité à la flexion multicomposant comprenant une première valeur d'indice de flexion B1 à une extrémité libre de la partie de fixation d'extension (36) de l'adaptateur de câble (30), une deuxième valeur d'indice de flexion B2 à une extrémité libre de la rallonge d'adaptateur (40), et une troisième valeur d'indice de flexion B3 à une extrémité libre de la flexion d'étanchéité multidiamétrique (60), avec B1 > B2 > B3.

3. Ensemble de câble à fibres optiques connectorisé (100) selon la revendication 1 ou 2,

l'ensemble de câble à fibres optiques connectorisé (100) comprenant une interface d'entrée de câble ($I_1$), une interface de butée d'adaptateur ($I_2$), et une interface d'étanchéité d'adaptateur ($I_3$) ;

l'interface d'entrée de câble ($I_1$) étant formée par une surface intérieure du passage de câble étendu (42) de la rallonge d'adaptateur (40) et une surface extérieure du câble à fibre optique (50), où le câble à fibre optique (50) s'étend dans le passage de câble étendu (42) de la rallonge d'adaptateur (40) vers la virole (20) ;

l'interface de butée d'adaptateur ($I_2$) étant formée par la rallonge d'adaptateur (40) et la butée d'adaptateur (35) de l'adaptateur de câble (30), où la rallonge d'adaptateur (40) est en contact avec une surface faisant face à l'extension de la butée d'adaptateur (35),

l'interface d'étanchéité d'adaptateur ($I_3$) étant formée par la butée d'adaptateur (35) et le boîtier de connecteur (10), où la butée d'adaptateur (35) est en contact avec une surface faisant face à la butée du boîtier de connecteur (10), et

la flexion d'étanchéité multidiamétrique (60) formant des ponts d'étanchéité respectifs à travers l'interface d'entrée de câble ($I_1$), l'interface de butée d'adaptateur ($I_2$), et l'interface d'étanchéité d'adaptateur ($I_3$).

4. Ensemble de câble à fibres optiques connectorisé (100) selon la revendication 3,

l'interface de butée d'adaptateur ($I_2$) et l'interface d'étanchéité d'adaptateur ($I_3$) étant orthogonales à l'axe longitudinal du boîtier de connecteur (10) ; et

l'interface d'entrée de câble ($I_1$) étant déplacée de et orientée dans une direction commune comme l'axe longitudinal du boîtier de connecteur (10).

5. Ensemble de câble à fibres optiques connectorisé (100) selon la revendication 3,

l'interface d'entrée de câble ($I_1$) prenant naissance au niveau d'un coude câble-connecteur ;

l'interface d'étanchéité de l'adaptateur ($I_3$) prenant naissance au niveau d'un coude boîtier-adaptateur ;

le coude câble-connecteur et le coude boîtier-adaptateur étant orientés dans des directions opposées par rapport à l'axe longitudinal ; et la flexion d'étanchéité multidiamétrique (60) formant des ponts d'étanchéité respectifs à travers le coude câble-connecteur et le coude boîtier-adaptateur orientés de manière opposée.

6. Ensemble de câble à fibres optiques connectorisé (100) selon la revendication 5, le coude de boîtier à adaptateur comprenant une face d'ancrage exposée orientée vers la partie de retenue de virole (12) du boîtier de connecteur (10).

7. Ensemble de câble à fibres optiques connectorisé (100) selon l'une quelconque des revendications 1 à 6,

   le passage de fibre optique étant positionné le long de l'axe longitudinal entre le passage de câble optique (32) de l'adaptateur de câble (30) et la virole (20) ; et
   le passage de câble optique (32) de l'adaptateur de câble (30) étant plus grand que le passage de fibre optique de l'adaptateur de câble (30).

8. Ensemble de câble à fibres optiques connectorisé (100) selon l'une quelconque des revendications 1 à 6,

   la partie d'insertion de boîtier (38) de l'adaptateur de câble (30) s'étendant depuis la butée d'adaptateur (35) le long de l'axe longitudinal vers la virole (20) pour une longueur $d_s$ logée ;
   la partie de fixation d'extension (36) de l'adaptateur de câble (30) s'étendant depuis la butée d'adaptateur (35) dans une direction opposée le long de l'axe longitudinal pour une longueur de réception d'extension $d_R$ ; et

$$d_R < d_s.$$

9. Ensemble de câble à fibres optiques connectorisé (100) selon l'une quelconque des revendications 1 à 6,

   le passage de câble étendu (42) de la rallonge d'adaptateur (40) ayant une longueur comprise entre 15 millimètres et 30 millimètres ; et
   la rallonge d'adaptateur (40) comprenant une épaisseur de paroi qui est comprise entre 1 millimètre et 4 millimètres sur une majorité de la longueur du passage de câble étendu (42) de la rallonge d'adaptateur (40).

10. Ensemble de câble à fibres optiques connectorisé (100) selon l'une quelconque des revendications 1 à 6, le passage de câble étendu (42) de la rallonge d'adaptateur (40) étant au moins 10 % plus long qu'une portée connectorisée de l'ensemble de câble, à l'exclusion de la flexion d'étanchéité multidiamétrique (60).

11. Ensemble de câble à fibres optiques connectorisé (100) selon l'une quelconque des revendications 1 à 6,

   la rallonge d'adaptateur (40) comprenant une surface intérieure de mise en prise d'adaptateur (45) qui est asymétrique en rotation par rapport à l'axe longitudinal ; et
   la partie de fixation d'extension (36) de l'adaptateur de câble (30) comprenant une surface extérieure qui complète l'asymétrie de rotation de la surface intérieure de mise en prise d'adaptateur (45) de la rallonge d'adaptateur (40).

12. Ensemble de câble à fibres optiques connectorisé (100) selon l'une quelconque des revendications 1 à 6, l'ensemble de câble à fibres optiques connectorisé (100) comprenant en outre un élément d'étanchéité sous-cutané positionné entre une surface extérieure du boîtier de connecteur (10) et une surface intérieure de la flexion d'étanchéité multidiamétrique (60).

13. Procédé de connectorisation d'un câble à fibres optiques (50), le procédé comprenant :

   la fourniture d'un boîtier de connecteur (10) comprenant une partie de retenue de virole (12), une partie de logement d'adaptateur (14), et un axe longitudinal s'étendant à travers la partie de retenue de virole (12) du boîtier de connecteur (10) et la partie de logement d'adaptateur (14) du boîtier de connecteur (10), le boîtier de connecteur (10) ayant un module de Young $E_H$ ;
   le maintien d'une virole (20) dans la partie de retenue de virole (12) du boîtier de connecteur (10), la virole (20) comprenant un alésage de fibre optique (22) ;
   la fourniture d'un adaptateur de câble (30) comprenant un passage de câble optique (32), un passage de fibre optique (34), une partie de fixation d'extension (36), une partie d'insertion de boîtier (38), et une butée d'adaptateur (35) positionnée entre la partie de fixation d'extension (36) et la partie d'insertion de boîtier (38), l'adaptateur de câble (30) ayant un module de Young $E_A$, qui est inférieur au module de Young $E_H$ du boîtier de connecteur (10) ;
   la mise en place de l'adaptateur de câble (30) dans la partie de logement d'adaptateur (14) du boîtier de connecteur (10), la butée d'adaptateur (35) limitant une étendue à laquelle l'adaptateur de câble (30) s'étend dans la partie de logement d'adaptateur (14) du boîtier de connecteur (10) ;

la fixation d'une rallonge d'adaptateur (40) à la partie de fixation d'extension (36) de l'adaptateur de câble (30), la rallonge d'adaptateur (40) comprenant un passage de câble étendu (42), la rallonge d'adaptateur (40) ayant un module de Young $E_E$ compris entre 80 MPa et 500 MPa, à température ambiante, qui est inférieur au module de Young $E_A$ de l'adaptateur de câble (30) ; l'extension d'un câble à fibre optique (50) le long du passage de câble étendu (42) de la rallonge d'adaptateur (40) et du passage de câble optique (32) de l'adaptateur de câble (30), le câble à fibre optique (50) comprenant une fibre optique s'étendant le long du passage de fibre optique de l'adaptateur de câble (30) jusqu'à l'alésage de fibre optique (22) de la virole (20) ; et la mise en prise d'une surface de câble extérieure du câble de fibre optique (50), d'une surface de boîtier extérieure du boîtier de connecteur (10), et d'une surface d'extension extérieure (44) de la rallonge d'adaptateur (40) avec une flexion d'étanchéité multidiamétrique (60) comprenant une partie de mise en prise de câble (62), une partie de mise en prise de boîtier (64), et une partie de flexion intermédiaire (66) s'étendant de la partie de mise en prise de câble (62) à la partie de mise en prise de boîtier (64), la flexion d'étanchéité multidiamétrique (60) ayant un module de Young $E_F$ compris entre 30 MPa et 80 MPa, à température ambiante, qui est inférieur au module de Young $E_E$ de la rallonge d'adaptateur (40).

FIG. 1

FIG. 2

EP 3 717 945 B1

100"

300

FIG. 3

FIG. 4

FIG. 4A

EP 3 717 945 B1

FIG. 5

FIG. 6

FIG. 7

FIG. 8

FIG. 9

*FIG. 10*

FIG. 11

FIG. 12

**EP 3 717 945 B1**